# EUROPÄISCHE PATENTSCHRIFT

(11) **EP 4 066 977 B1**
(45) Veröffentlichungstag und Bekanntmachung des Hinweises auf die Patenterteilung: **04.06.2025**
(21) Anmeldenummer: 22155860.4
(22) Anmeldetag: 09.02.2022
(51) Int. Cl.: B23K 3/08, B23K 9/16, B23K 9/32

(54) **PROZESSANORDNUNG FÜR EINEN METALLSCHUTZGAS-SCHWEISS- ODER LÖTPROZESS**
PROCESS ARRANGEMENT FOR A METAL-PROTECTIVE GAS WELDING OR SOLDERING PROCESS
AGENCEMENT DE PROCESSUS POUR UN PROCESSUS DE SOUDAGE OU DE BRASAGE DE MÉTAUX SOUS GAZ DE PROTECTION

(30) Priorität: 29.03.2021 DE 102021107802
(43) Veröffentlichungstag der Anmeldung: 05.10.2022
(73) Patentinhaber: Audi AG, 85057 Ingolstadt (DE)
(72) Erfinder: DENZER, Klaus, 74189 Weinsberg (DE)

(56) Entgegenhaltungen:
- DE-A1- 102011 116 495
- DE-A1- 102019 211 860
- DE-A1- 2 455 806
- US-A- 2 590 084

## Beschreibung

Die Erfindung betrifft eine Prozessanordnung für einen Metallschutzgas-Schweiß- oder Lötprozess nach dem Oberbegriff des Anspruches 1.

Ein wesentlicher Aspekt der Erfindung besteht darin, dass erfindungsgemäß der Brenner ohne Schutzgasdüse ausgebildet werden kann. In diesem Fall erfolgt die Schutzgas-Zufuhr in den Brenner-Durchlass alleine über den Schutzgaskanal des Hilfswerkzeugs. Dadurch ergeben sich Vorteile bezüglich Brenner-Design sowie Brenner-Reinigung sowie Zugänglichkeitsvorteile. Eine Prozessanordnung nach dem Stand der Technik ist beispielsweise der US 2 590 084 A zu entnehmen.

Mit Hilfe einer solchen Prozessanordnung wird eine Schweiß- oder Lötstelle (zum Beispiel ein Schweiß- oder Lötpunkt) zur Verbindung eines Bauteilverbunds gesetzt. Ein derartiger Schweiß- oder Lötpunkt kann beispielhaft eine Falzflanschverbindung zwischen Stahlblechbauteilen fixieren. Die beiden Stahlblechbauteile können exemplarisch eine Fahrzeugtür bilden, die als ein Anbauteil mit einer Fahrzeugkarosserie verbaubar ist.

Aus der DE 10 2019 211 860 A1 ist eine gattungsgemäße Prozessanordnung bekannt. Diese weist ein Hilfswerkzeug auf, das im Metallschutzgas-Schweißprozess den an den Schweiß- oder Lötpunkt angrenzenden vor schweißbedingten Schmauchspuren schützt. Das Hilfswerkzeug weist einen Brenner-Durchlass auf, über den ein Brenner mit seiner Elektrode in Wirkverbindung mit dem Bauteilverbund bringbar ist, und zwar Bildung des Schweiß- oder Lötpunktes. Das Hilfswerkzeug weist einen Schutzgasanschluss auf, der mit einer Schutzgasquelle verbindbar ist. Über den Schutzgasanschluss kann Schutzgas in den Brenner-Durchlass einströmen, um die Metallschmelze im Schweiß- oder Lötpunkt abzuschirmen.

Im obigen Stand der Technik ist der Schutzgas-Strömungsweg im Hilfswerkzeug mit einer radial äußeren Ringkammer realisiert. Diese geht nach radial innen in eine querschnittsreduzierte, ringförmige Düsenkammer über. Die Düsenkammer ist an einem bodenseitigen Ringspalt in Strömungsverbindung mit dem Brenner-Durchlass. Sowohl die radial äußere Ringkammer, die Düsenkammer als auch der Ringspalt sind an der Hilfswerkzeug-Unterseite offen gestaltet, so dass das durchströmende Schutzgas unmittelbar in Kontakt mit der Bauteilverbund-Oberfläche ist. In der radial äußeren Ringkammer wird eine Schutzgas-Ringströmung erzeugt, die im weiteren Strömungsverlauf im Brenner-Durchlass eine Wirbelströmung um eine Mittelachse des Brenner-Durchlasses bildet. Insgesamt ergeben sich daher vergleichsweise lange Schutzgas-Strömungswege im Hilfswerkzeug, so dass das Hilfswerkzeug entsprechend bauraumintensiv gestaltet ist. Von daher ist der Einsatz des Hilfswerkzeugs in einer bauraumbegrenzten Umgebung, etwa an der oben erwähnten Falzflanschverbindung, nicht möglich.

Aus der DE 10 2016 225 831 A1 ist ein Spannelement für eine Spannvorrichtung zum Schweißen von Werkstücken bekannt. Aus der EP 1 862 248 A1 ist eine Vorrichtung zum Verhindern von Verunreinigung auf einer Bauteiloberfläche benachbart zu einer Schweißnaht durch beim MSG-Schweißen erzeugte Schweißspritzer bekannt.

Die Aufgabe ist durch die Merkmale des Anspruches 1 gelöst. Bevorzugte Weiterbildungen der Erfindung sind in den Unteransprüchen offenbart.

Die Erfindung geht von einem Hilfswerkzeug aus, das in einem Metallschutzgas-Schweiß- oder Lötprozess einsetzbar ist. Das Hilfswerkzeug weist einen Brenner-Durchlass auf, über den ein Brenner mit seiner Elektrode bis in Wirkverbindung mit einem zu verbindenden Bauteilverbund bringbar ist, und zwar unter Bildung einer Schweiß- oder Lötstelle, zum Beispiel eines Schweiß- oder Lötpunkts. Das Hilfswerkzeug weist einen Schutzgasanschluss auf, der mit einer externen Schutzgasquelle verbindbar ist. Über den Schutzgasanschluss kann das Schutzgas in den Brenner-Durchlass einströmen, um die Metallschmelze im Schweiß- oder Lötpunkt abzuschirmen. Der Brenner kann ohne Schutzgasdüse ausgebildet sein, so dass die Schutzgas-Zufuhr in den Brenner-Durchlass alleine über einen Schutzgaskanal des Hilfswerkzeugs erfolgt.

Es ist hervorzuheben, dass die Erfindung auf sämtliche geeignete Schweiß- oder Lötverfahren anwendbar ist, zum Beispiel auch auf eine lineares MAG/MIG-Schweißen oder -Löten.

Gemäß dem kennzeichnenden Teil des Anspruches 1 ist der der durch das Hilfswerkzeug geführte Schutzgas-Strömungsweg im Vergleich zum Stand der Technik bauraumreduzierter gestaltet, so dass das Hilfswerkzeug im Vergleich zum Stand der Technik wesentlich reduziertere Bauteil-Abmaße aufweist. Auf diese Weise kann das erfindungsgemäße Hilfswerkzeug auch in einer bauraumbegrenzten Umgebung, etwa bei einer später beschriebenen Falzflanschverbindung, eingesetzt werden. Im Hinblick auf eine bauraumreduzierte Ausführung weist das Hilfswerkzeug zumindest einen Schutzgaskanal auf, der den Schutzgasanschluss direkt, das heißt ohne Zwischenordnung von Strömungskammern, mit dem Brenner-Durchlass verbindet.

Im Gegensatz zum Stand der Technik verläuft daher der erfindungsgemäße Schutzgaskanal zumindest teilweise im Inneren des Hilfswerkzeugs. Der Strömungsquerschnitt des Schutzgaskanals ist daher komplett von Hilfswerkzeug-Material begrenzt, so dass das im Schutzkanal strömende Schutzgas kontaktfrei zum Bauteilverbund ist. Im Gegensatz zum Stand der Technik erstreckt sich der erfindungsgemäße Schutzkanal mit geradliniger Kanalachse von dem Schutzgasanschluss bis unmittelbar in den Brenner-Durchlass, so dass das Schutzgas linear in Richtung Brenner-Durchlass strömen kann, und zwar ohne Ringströmung in einer ansonsten zwischengeschalteten Strömungs-Ringkammer. Auf diese Weise ergeben sich im Vergleich zum Stand der Technik kürzere Strömungswege im Hilfswerkzeug, wodurch das Hilfswerkzeug bauraumreduzierter ausführbar ist.

Der Brenner ist ein vom Hilfswerkzeug separates Bauteil. Während des Schweiß- oder Lötprozesses ragt der Brenner von der, dem Bauteilverbund abgewandten Hilfswerkzeug-Seite in den Brenner-Durchlass ein, und zwar insbesondere berührungsfrei, das heißt unter Bildung eines Ringspalts zwischen dem Brenner bzw. der Brenner-Elektrode und der Werkzeug-Innenwandung. Im Schweiß- oder Lötprozess kann somit das im Brenner-Durchlass befindliche Schutzgas über den Ringspalt nach werkzeugaußen abströmen.

In einer technischen Umsetzung kann der Brenner-Durchlass rotationssymmetrisch um eine Werkzeug-Mittelachse ausgebildet sein. Der Brenner-Durchlass kann entlang der Werkzeug-Mittelachse aufgeteilt sein in eine, dem Bauteilverbund zugewandte zentrale Kammer sowie in eine, vom Bauteilverbund abgewandte trichterförmige Einführöffnung. In der zentralen Kammer des Brenner-Durchlasses ist unter Bildung eines Lichtbogens zwischen der Elektrode und dem Bauteilverbund der Schweiß- oder Lötpunkt erzeugbar. Bevorzugt kann sich der Kammer-Querschnitt der zentralen Kammer in Richtung Bauteilverbund ausweiten. Die zentrale Kammer und die trichterförmige Einführöffnung können an einem querschnittsreduzierten Übergang miteinander in Strömungsverbindung sein.

Wie bereits oben erwähnt, kann der Brenner ohne Schutzgasdüse ausgebildet werden. In diesem Fall erfolgt die Schutzgas-Zufuhr in den Brenner-Durchlass alleine über den Schutzgaskanal des Hilfswerkzeugs. Um während des Schweiß- oder Lötprozesses ein Niederdrücken der Metallschmelze bzw. eine Schweiß- oder Lötpunkt-Überhöhung zu vermeiden, ist es bevorzugt, wenn die Schutzgasströmung beschleunigt auf die Metallschmelze auftrifft. Vor diesem Hintergrund ist es vorteilhaft, wenn der Strömungsquerschnitt des Schutzgaskanals in Richtung auf seine Mündungsöffnung sich verjüngt. Die Hauptwirkung der beschleunigten Schutzgasströmung besteht darin, eine stabilere Abschirmebene (Fläche) aus Schutzgas über der Bauteiloberfläche erzeugen, wodurch betriebssicher Schmauchablagerungen vermieden werden können.

Die Mündungsöffnung des Schutzgaskanals ist in einer, den Brenner-Durchlass begrenzenden Werkzeug-Innenwandung ausgebildet.

In einer Weiterbildung der Erfindung können im Hilfswerkzeug zumindest zwei Schutzgaskanäle ausgebildet sein. Über die beiden Schutzgaskanäle kann in einer ersten Variante jeweils Schutzgas in den Brenner-Durchlass zugeführt werden. Alternativ dazu kann über lediglich einen Schutzgaskanal eine Gaszufuhr erfolgen, während über den anderen Schutzgaskanal eine Schutzgas-Abfuhr erfolgt.

Bevorzugt können die Mündungsöffnungen der beiden Schutzgaskanäle mit Bezug auf die Werkzeug-Mittelachse an diametral gegenüberliegenden Seiten in den Brenner-Durchlass münden.

Erfindungsgemäß kann die Baugröße des Hilfswerkzeugs für den Einsatz in einer speziellen, bauraumbegrenzten Umgebung angepasst werden, die nachfolgend beschrieben ist: demnach kann der Bauteilverbund aus zwei Stahlblechteilen aufgebaut sein, die randseitig über eine Falzflanschverbindung miteinander verbunden sind. Die Falzflanschverbindung kann über eine Flanschbreite von einer Stahlblechteil-Struktur abragen. Zudem kann sich die Falzflanschverbindung in einer Flanschlängsrichtung zumindest teilweise entlang der der Stahlblechteil-Struktur (zum Beispiel Türstruktur) erstrecken. Der Flansch eines ersten Stahlblechteils kann mit einem Falzsteg in der Flanschbreitenrichtung über den Flansch des zweiten Stahlblechteils hinaus verlängert sein. Der Falzsteg ist an einer Falzachse um 180° umgeschlagen, so dass sich ein Dreilagenaufbau aus dem Falzsteg und dem äußeren Flansch des ersten Stahlblechteils mit zwischengeklemmtem mittlerem Flansch des zweiten Stahlblechteils ergibt. Zwischen dem Falzsteg und dem mittleren Flansch bildet sich eine Blech-Abstufung, deren Stufenhöhe der Blechdicke des ersten Stahlblechteils entspricht. Der Schweiß- oder Lötpunkt kann in diesem Fall unmittelbar an der Blech-Abstufung gesetzt sein, um den Falzsteg mit dem mittleren Flansch zu verbinden.

Ein wesentlicher Aspekt der Erfindung besteht darin, dass das Hilfswerkzeug speziell an die oben angedeutete Falzflanschverbindung anpassbar ist. Vor diesem Hintergrund kann das Hilfswerkzeug in etwa quaderförmig mit einer sich in Flanschlängsrichtung erstreckenden Bauteillänge und einer sich in Flanschbreitenrichtung erstreckenden Bauteilbreite ausgebildet sein. Die Bauteilbreite des Hilfswerkzeugs ist dabei bevorzugt kleiner bemessen als die Flanschbreite der Falzflanschverbindung.

Im Hinblick auf eine bauraumgünstige Gestaltung des Hilfswerkzeugs ist es bevorzugt, wenn der zumindest eine Schutzgaskanal sich in der Flanschlängsrichtung erstreckt. Gegebenenfalls kann der Schutzgaskanal nicht unmittelbar in Längsflucht zur Flanschlängsrichtung ausgerichtet sein, sondern vielmehr um einen geringfügigen Winkel davon versetzt sein. In diesem Fall ist der Schutzgaskanal in einer Schrägstellung im Hilfswerkzeug ausgebildet, in der die Schutzkanal-Achse mit der Flanschlängsrichtung einen geringfügigen Winkel aufspannt. Alternativ und/oder zusätzlich kann der Schutzgaskanal um einen Kippwinkel in der Hilfswerkzeug-Hochrichtung geneigt sein, und zwar in Richtung auf den Brenner-Durchlass nach unten.

Die Mündungsöffnung des Schutzgaskanals kann bevorzugt in unmittelbarer Nähe des Bauteilverbunds in der Hilfswerkzeug-Innenwandung ausgebildet sein. Für den Fall, dass zwei Schutzgaskanäle im Hilfswerkzeug bereitgestellt sind, gilt folgendes: so kann das aus der einen Mündungsöffnung kommende Schutzgas unmittelbar den Falzsteg anströmen. Demgegenüber kann das aus der zweiten Mündungsöffnung kommende Schutzgas unmittelbar den (vom Falzsteg freigelegten) Flansch des zweiten Stahlblechteils anströmen. In diesem Fall ist es bevorzugt, wenn die zweite Mündungsöffnung (unter Berücksichtigung der Blech-Abstufung) um einen Höhenversatz unterhalb der ersten Mündungsöffnung positioniert ist.

Nachfolgend sind Ausführungsbeispiele der Erfindung anhand der beigefügten Figuren beschrieben.

Es zeigen:
- Fig. 1: eine fertiggestellte Falzflanschverbindung mit gesetztem Schweiß- oder Lötpunkt;
- Fig. 2 bis 4: unterschiedliche Ansichten eines auf die Falzflanschverbindung gesetzten Hilfswerkzeugs zur Durchführung eines Metallschutzgas-Schweiß- oder Lötprozesses;
- Fig. 5 bis 8: weitere Ausführungsbeispiele des Hilfswerkzeugs.

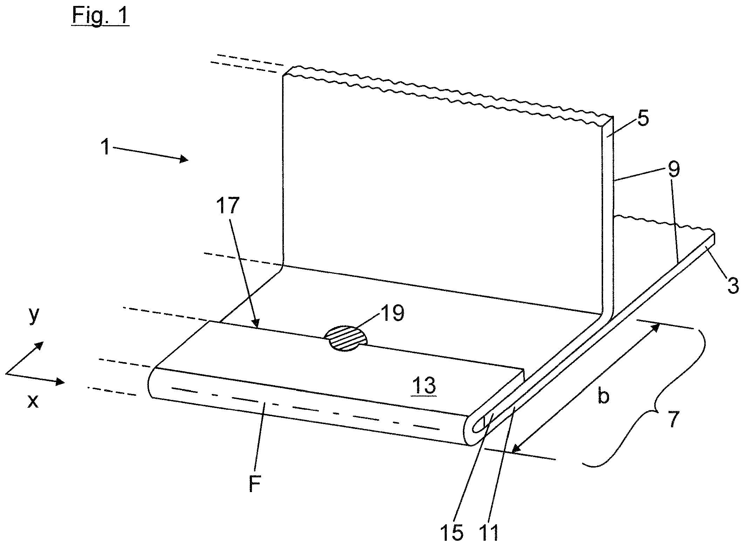

In Figur 1 ist ein fertiggestellter Bauteilverbund 1 gezeigt, der aus zwei Stahlblechteilen 3, 5 aufgebaut ist, die eine Stahlblechteil-Struktur 9 (zum Beispiel eine Türstruktur) bilden. Die beiden Stahlblechteile 3, 5 sind randseitig über eine Falzflanschverbindung 7 miteinander verbunden. Diese ragt über eine Flanschbreite b von der Stahlblechteil-Struktur 9 ab. Zudem erstreckt sich die Falzflanschverbindung 7 in einer Flanschlängsrichtung x zumindest teilweise entlang der Stahlblechteil-Struktur 9. Die Falzflanschverbindung 7 ist wie folgt realisiert: So ist ein Flansch 11 des ersten Stahlblechteils 3 mit einem Falzsteg 13 in der Flanschbreitenrichtung y über den Flansch 15 des zweiten Stahlblechteils 5 hinaus verlängert. Der Falzsteg 13 ist an einer Falzachse F um 180° umgeschlagen. Auf diese Weise ergibt sich ein Dreilagenaufbau aus dem Falzsteg 13 und dem äußeren Flansch 11 des ersten Stahlblechteils 3 mit zwischengeklemmtem mittleren Flansch 15 des zweiten Stahlblechteils 5. Zwischen dem Falzsteg 13 und dem mittleren Flansch 15 ist eine Blech-Abstufung 17 gebildet, deren Stufenhöhe der Blechdicke des ersten Stahlblechteils 3 entspricht. Unmittelbar auf der Blech-Abstufung 17 ist ein Schweiß- oder Lötpunkt 19 gesetzt, der den Falzsteg 13 mit dem Flansch 15 des zweiten Stahlblechteils 5 verbindet. In der Figur 1 ist daher eine Überlappstoßverbindung gezeigt, bei der der obere Falzsteg 13 stufenartig in den Flansch 15 des zweiten Stahlblechteils 5 übergeht.

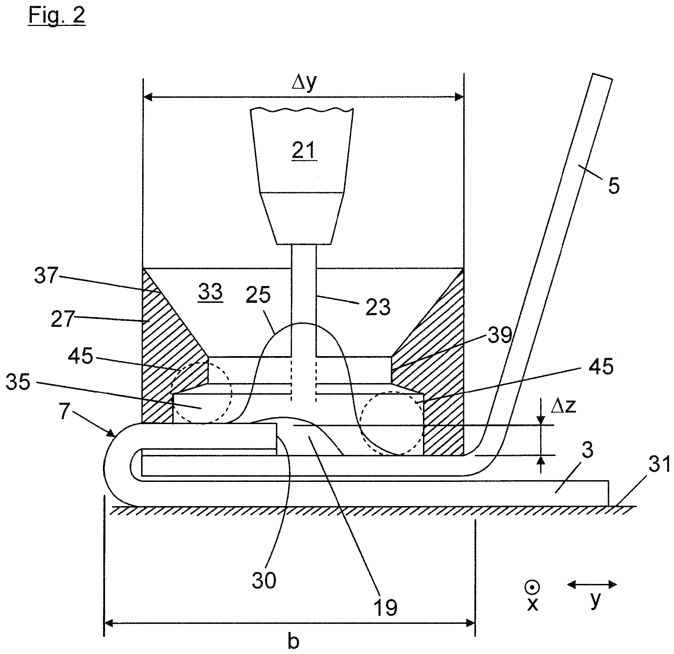

Der Schweiß- oder Lötpunkt 19 wird mit Hilfe einer Prozessanordnung gesetzt, die nachfolgend anhand der Figuren 2 bis 4 beschrieben wird. Demnach wird mittels der Prozessanordnung ein Metallschutzgas-Schweiß- oder Lötprozess mit Hilfe eines Brenners 21 durchgeführt. Dieser ist im Schweiß- oder Lötprozess mit seiner Elektrode 23 in Wirkverbindung mit dem Bauteilverbund 1, so dass unter Bildung eines Lichtbogens 25 zwischen der Elektrode 23 und dem Bauteilverbund 1 der Schweiß- oder Lötpunkt 19 erzeugbar ist. Der Metallschutzgas-Schweiß- oder Lötprozess ist bevorzugt Bestandteil einer vollautomatisierten Prozesskette zur Herstellung des Bauteilverbunds 1.

Die Prozessanordnung weist zudem ein Hilfswerkzeug 27 auf, das im Schweiß- oder Lötprozess auf den Bauteilverbund 1 gesetzt ist. Das Hilfswerkzeug 27 schützt den an den Schweiß- oder Lötpunkt 19 angrenzenden Bereich vor schweißbedingten Schmauchspuren. Gemäß der Figur 2 ist das Hilfswerkzeug 27 Bestandteil eines nicht gezeigten schwenkbaren Spannbackens einer Spanneinheit. In der Figur 2 ist der schwenkbare Spannbacken mitsamt Hilfswerkzeug 27 unter Zwischenlage des Bauteilverbunds 1 gegen einen ortsfesten Spannbacken 31 der Spanneinheit verspannt.

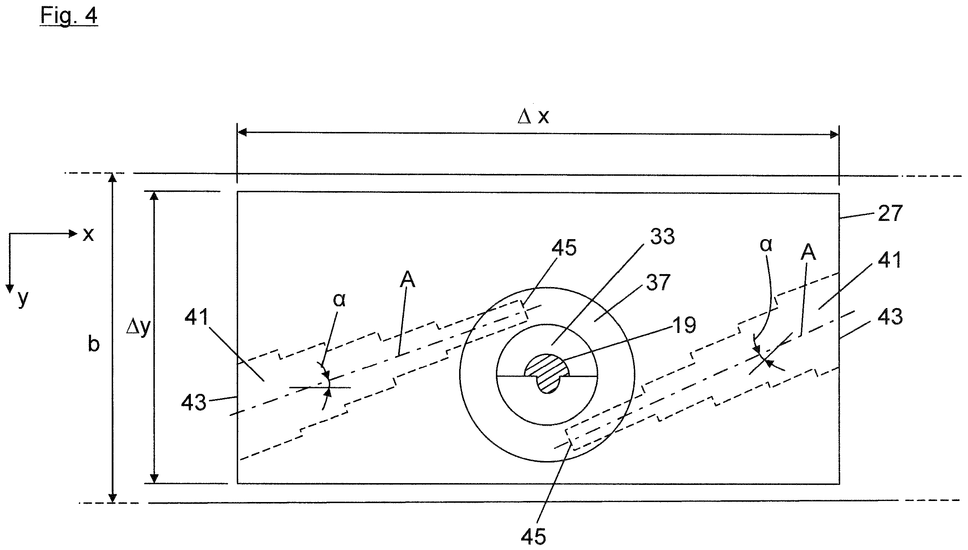

Die Geometrie des Hilfswerkzeugs 27 ist speziell für den Einsatz des Metallschutzgas-Schweiß- oder Lötprozesses zur Erzeugung des Schweiß- oder Lötpunkts 19 auf der bauraumbeengten Falzflanschverbindung 7 ausgelegt. Demnach ist das Hilfswerkzeug 27 in etwa quaderförmig mit einer sich in Flanschlängsrichtung x erstreckenden Bauteillänge Δx (Figur 4) und einer sich in Flanschbreitenrichtung y erstreckenden Bauteilbreite Δy (Figur 4) ausgebildet. Die Bauteilbreite Δy des Hilfswerkzeugs 27 ist kleiner bemessen als die Flanschbreite b der Falzflanschverbindung 7, so dass das Hilfswerkzeug 27 prozesssicher auf der Falzflanschverbindung 7 abstützbar ist.

Gemäß den Figuren 2 bis 4 weist das Hilfswerkzeug 27 einen Brenner-Durchlass 33 auf, über den der Brenner 21 mit seiner Elektrode 23 in Wirkverbindung mit dem Bauteilverbund 1 bringbar ist. Der Brenner-Durchlass 33 ist in der Figur 2 rotationssymmetrisch um eine Werkzeug-Mittelachse W ausgebildet. Entlang dieser Mittelachse W ist der Brenner-Durchlass 33 aufgeteilt in eine dem Bauteilverbund 1 zugewandte Schweißkammer 35, in der unter Bildung des Lichtbogens 25 der Schweiß- oder Lötpunkt 19 erzeugbar ist, und in eine vom Bauteilverbund 1 abgewandte trichterförmige Einführöffnung 37. In der Figur 2 weitet sich der Kammer-Querschnitt der Schweißkammer 35 in Richtung Überlappstoßverbindung aus. Die Schweißkammer 35 und die Einführöffnung 37 sind in einem querschnittsreduzierten Übergang 39 miteinander verbunden.

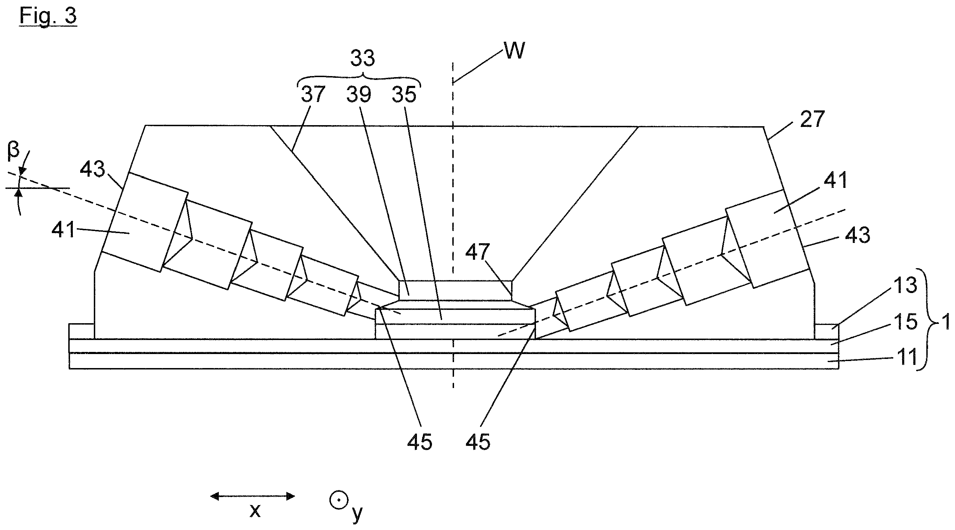

Wie aus der Figur 3 oder 4 hervorgeht, weist das Hilfswerkzeug 27 zwei Schutzgaskanäle 41 auf. Jeder der Schutzgaskanäle 41 verbindet einen Schutzgasanschluss 43 direkt mit dem Brenner-Durchlass 33. Die beiden Schutzgaskanäle 41 sind über Mündungsöffnungen 45 in Strömungsverbindung mit dem Brenner-Durchlass 33. Gemäß der Figur 4 sind die beiden Mündungsöffnungen 45 jeweils in einer, den Brenner-Durchlass 33 begrenzenden Werkzeug-Innenwandung 47 ausgebildet.

Gemäß den Figuren 3 und 4 sind die Mündungsöffnungen 45 der beiden Schutzgaskanäle 41 mit Bezug auf die Mittelachse W an diametral gegenüberliegenden Seiten in der Hilfswerkzeug-Innenwandung 47 ausgebildet. Die beiden Mündungsöffnungen 45 sind so positioniert, dass sich in dem Brenner-Durchlass 33 eine Wirbelströmung um die Hilfswerkzeug-Mittelachse W ergibt. Hierzu ist jeder der beiden Schutzgaskanäle 41 in einer Schrägstellung im Hilfswerkzeug 27 ausgebildet, in der die jeweilige Schutzkanal-Achse A mit der Flanschlängsrichtung x einen Winkel α (Figur 4) aufspannt.

Um diese stufenartige Fügegeometrie der Überlappstoßverbindung sicher abbilden zu können, ist in der Unterseite des Hilfswerkzeugs 27 eine entsprechende Abstufung 30 (Figur 2) ausgebildet.

Wie aus der Figur 3 weiter hervorgeht, verjüngt sich der Strömungsquerschnitt des jeweiligen Schutzgaskanals 41 in Richtung auf seine Mündungsöffnung 45. Die beiden Mündungsöffnungen 45 sind jeweils in unmittelbarer Nähe zum Bauteilverbund 1 in der Hilfswerkzeug-Innenwandung 47 ausgebildet.

Gemäß der Figur 3 strömt das aus der ersten Mündungsöffnung 45 kommende Schutzgas unmittelbar den Falzsteg 13 an, während das aus der zweiten Mündungsöffnung 45 kommende Schutzgas den Flansch 15 des zweiten Stahlblechteils 5 anströmt. Unter Berücksichtigung der Stufenhöhe der Blech-Abstufung 17 ist die zweite Mündungsöffnung 45 um einen Höhenversatz Δz (Figur 2) unterhalb der ersten Mündungsöffnung 45 positioniert.

Während des Schweiß- oder Lötprozesses ragt der Brenner 21 von der, dem Bauteilverbund 1 abgewandten Hilfswerkzeug-Seite in die trichterförmige Einführöffnung 37 des Brenner-Durchlasses 33 ein, und zwar berührungsfrei, so dass sich ein Ringspalt zwischen dem Brenner 21 bzw. der Brenner-Elektrode 23 und der Werkzeug-Innenwandung 27 ergibt. Das über die beiden Schutzgaskanäle 41 in den Brenner-Durchlass 33 einströmende Schutzgas wird über den Ringspalt nach werkzeugaußen abgeleitet.

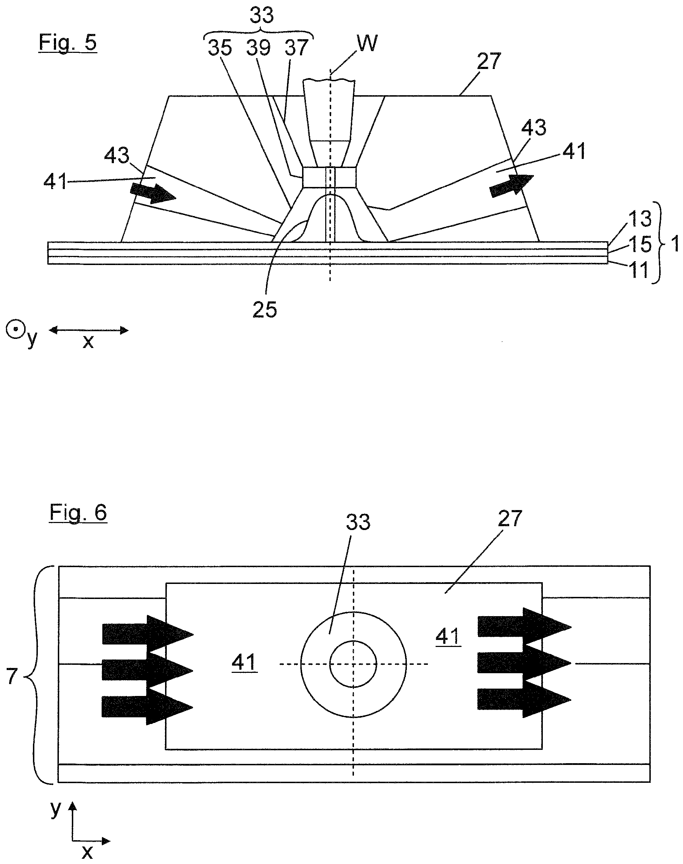

In den Figuren 5 und 6 ist ein zweites Ausführungsbeispiel der Erfindung gezeigt. Das Hilfswerkzeug 27 ist dabei im Wesentlichen baugleich zum Hilfswerkzeug 27 gemäß dem ersten Ausführungsbeispiel, so dass auf die Vorbeschreibung verwiesen wird. Im Unterschied zum ersten Ausführungsbeispiel erfolgt in den Figuren 5 und 6 über einen der beiden Schutzkanäle 41 eine Gaszufuhr in den Brenner-Durchlass 33, während über den anderen Schutzgaskanal 41 eine Schutzgas-Abfuhr erfolgt.

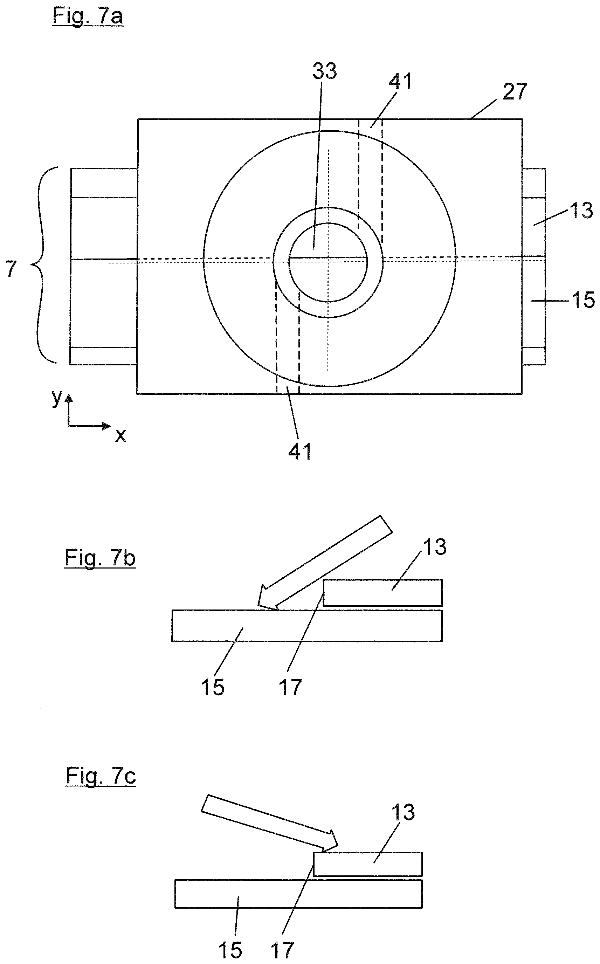

In der Figur 7a sind die beiden Schutzgaskanäle 41 des Hilfswerkzeugs 27 nicht in der Flanschlängsrichtung x ausgerichtet, sondern vielmehr quer dazu, das heißt in der Flanschbreitenrichtung y. Die beiden Mündungsöffnungen 45 der Schutzgaskanäle 41 sind dabei so positioniert, dass das jeweils ausströmende Schutzgas entweder unmittelbar auf den Falzsteg 13 der Bauteilverbindung gerichtet ist (Figur 7c) oder unmittelbar auf den Flansch 15 des zweiten Stahlblechteils 5 gerichtet ist (Figur 7b), um eine möglichst einwandfreie Wirbelströmung zu erzielen.

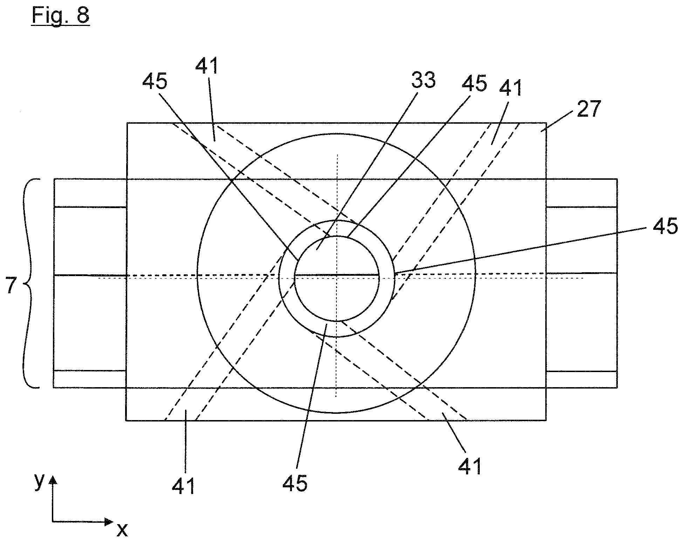

In der Figur 8 ist ein weiteres Ausführungsbeispiel gezeigt, in dem das Hilfswerkzeug 27 insgesamt vier Schutzgaskanäle 41 aufweist, die jeweils an voneinander separaten Mündungsöffnungen 45 in den Brenner-Durchlass 33 einmünden. Auf diese Weise ergibt sich eine im Vergleich zum ersten Ausführungsbeispiel bauraumintensivere Gestaltung des Hilfswerkzeugs 27.

Der Metallschutzgas-Schweiß- oder Lötprozess ist bevorzugt Bestandteil einer vollautomatisierten Prozesskette zur Herstellung des Bauteilverbunds 1.

### BEZUGSZEICHENLISTE:

- 1: Bauteilverbund
- 3, 5: Stahlblechteile
- 7: Falzflanschverbindung
- 9: Stahlblechteil-Struktur
- 11: Flansch des ersten Stahlblechteils 3
- 13: Falzsteg
- 15: Flansch des zweiten Stahlblechteils 5
- 17: Blech-Abstufung
- 19: Schweiß- oder Lötstelle
- 21: Brenner
- 23: Elektrode
- 25: Lichtboden
- 27: Hilfswerkzeug
- 30: Abstufung
- 31: ortsfester Spannbacken
- 33: Brenner-Durchlass
- 35: Schweißkammer
- 37: trichterförmige Einführöffnung
- 39: Übergang
- 41: Schutzgaskanäle
- 43: Schutzgasanschluss
- 45: Mündungsöffnungen
- 47: Hilfswerkzeug-Innenwandung
- F: Falzachse
- W: Werkzeug-Mittelachse
- A: Schutzgaskanal-Achse
- b: Flanschbreite
- Δx: Bauteillänge
- Δy: Bauteilbreite

## Patentansprüche

1. Prozessanordnung für einen Metallschutzgas-Schweiß- oder Lötprozess, mittels dem eine Schweiß- oder Lötstelle (19) zur Verbindung eines Bauteilverbunds (1) setzbar ist, mit einem Hilfswerkzeug (27), das im Schweiß- oder Lötprozess den an die Schweiß- oder Lötstelle (19) angrenzenden Bereich vor Schmauchspuren schützt, wobei das Hilfswerkzeug (27) einen Brenner-Durchlass (33) aufweist, über den ein Brenner (21) mit seiner Elektrode (23) in Wirkverbindung mit dem Bauteilverbund (1) bringbar ist, und zwar unter Bildung der Schweiß- oder Lötstelle (19), und wobei das Hilfswerkzeug (27) einen Schutzgasanschluss (43) aufweist, der mit einer Schutzgasquelle verbindbar ist und über den Schutzgas in den Brenner-Durchlass (33) einströmbar ist, um die Metallschmelze in der Schweiß- oder Lötstelle (19) abzuschirmen, wobei im Hinblick auf eine bauraumreduzierte Ausführung das Hilfswerkzeug (27) mit zumindest einem Schutzgas-Kanal (41) ausgebildet ist, der den Schutzgasanschluss (43) direkt, das heißt ohne Zwischenordnung von Strömungskammern, mit dem Brenner-Durchlass (33) verbindet, und
wobei die Mündungsöffnung (45) des Schutzgaskanals (41) in einer den Brenner-Durchlass (33) begrenzenden Werkzeug-Innenwandung (47) ausgebildet ist,
**dadurch gekennzeichnet,**
**dass** die Mündungsöffnung (45) so in der Hilfswerkzeug-Innenwandung (47) positioniert ist, dass sich im Brenner-Durchlass (33) eine Wirbelströmung um die Hilfswerkzeug-Mittelachse (W) ausbildet.

2. Prozessanordnung nach Anspruch 1, **dadurch gekennzeichnet, dass** die Prozessanordnung einen Brenner aufweist und dass der Brenner (21) ohne Schutzgasdüse ausgebildet ist, so dass die Schutzgas-Zufuhr in den Brenner-Durchlass (33) alleine über einen Schutzgaskanal (41) des Hilfswerkzeugs (27) erfolgt.

3. Prozessanordnung nach Anspruch 1 oder 2, **dadurch gekennzeichnet, dass** der Schutzgaskanal (41) zumindest teilweise im Inneren des Hilfswerkzeugs (27) verläuft, so dass insbesondere der Strömungsquerschnitt des Schutzgaskanals (41) komplett von Hilfswerkzeug-Material begrenzt ist und/oder der Schutzgaskanal (41) keine direkte Strömungsverbindung zum Bauteilverbund (1) aufweist oder gegenüber dem Bauteilverbund (1) geschlossen ist, und/oder dass das im Schutzgaskanal (41) strömende Schutzgas kontaktfrei zum Bauteilverbund (1) ist und/oder dass die Prozessanordnung einen Brenner aufweist und dass im Schweiß- oder Lötprozess der Brenner (21) von der, dem Bauteilverbund (1) abgewandten Hilfswerkzeug-Seite in den Brenner-Durchlass (33) einragt, und zwar unter Bildung eines Ringspalts zwischen dem Brenner (21) bzw. der Brenner-Elektrode (23) und der Werkzeug-Innenwandung (47), und dass insbesondere das im Brenner-Durchlass befindliche Schutzgas über den Ringspalt nach werkzeugaußen abströmen kann.

4. Prozessanordnung nach einem der vorhergehenden Ansprüche, **dadurch gekennzeichnet, dass** der Brenner-Durchlass (33) rotationssymmetrisch um eine Werkzeug-Mittelachse (W) ausgebildet ist, und/oder dass insbesondere der Brenner-Durchlass (33), insbesondere entlang der Mittelachse (W), aufgeteilt ist in eine dem Bauteilverbund (1) zugewandte zentrale Kammer (35), in der unter Bildung eines Lichtbogens (25) zwischen der Elektrode (23) und dem Bauteilverbund (1) die Schweiß- oder Lötstelle (19) erzeugbar ist, und in eine vom Bauteilverbund (1) abgewandte, insbesondere trichterförmige Einführöffnung (37), und/oder dass sich der Kammer-Querschnitt der zentralen Kammer (35) in Richtung Bauteilverbund (1) ausweitet, und/oder dass die zentrale Kammer (35) und die Einführöffnung (37) an einem querschnittsreduzierten Übergang (39) miteinander verbunden sind.

5. Prozessanordnung nach einem der vorhergehenden Ansprüche, **dadurch gekennzeichnet, dass** der Strömungsquerschnitt des Schutzgaskanals (41) in Richtung auf seine Mündungsöffnung (45) sich verjüngt, und/oder dass sich der Schutzgaskanal (41) geradlinig im Hilfswerkzeug (27) erstreckt, so dass das Schutzgas linear in Richtung Brenner-Durchlass (33) strömt.

## Claims

1. Process arrangement for a gas-shielded metal arc welding or soldering process, by means of which a welding or soldering point (19) can be set for joining a component assembly (1), the process arrangement having an auxiliary tool (27) which, during the welding or soldering process, protects the area adjacent to the welding or soldering point (19) from traces of smoke, wherein the auxiliary tool (27) has a burner passage (33) via which a burner (21) with its electrode (23) can be brought into operative connection with the component assembly (1), specifically to form the welding or soldering point (19), and wherein the auxiliary tool (27) has a shielding gas connection (43) which can be connected to a shielding gas source and via which shielding gas can flow into the burner passage (33) in order to shield the molten metal in the welding or soldering point (19), wherein, with a view to a configuration with reduced installation space, the auxiliary tool (27) is designed with at least one shielding gas channel (41) which connects the shielding gas connection (43) directly, that is, without the interposition of flow chambers, to the burner passage (33), and
wherein the mouth opening (45) of the shielding gas channel (41) is formed in an inner tool wall (47) delimiting the burner passage (33),
**characterized in that**
the mouth opening (45) is positioned in the auxiliary tool inner wall (47) such that a turbulent flow is formed in the burner passage (33) around the auxiliary tool central axis (W).

2. Process arrangement according to claim 1, **characterized in that** the process arrangement has a burner and in the burner (21) is designed without a shielding gas nozzle, so that the shielding gas supply into the burner passage (33) takes place solely via a shielding gas channel (41) of the auxiliary tool (27).

3. Process arrangement according to claim 1 or 2, **characterized in that** the shielding gas channel (41) extends at least partially inside the auxiliary tool (27), so that in particular the flow cross-section of the shielding gas channel (41) is completely delimited by auxiliary tool material and/or the shielding gas channel (41) has no direct flow connection to the component assembly (1) or is closed with respect to the component assembly (1), and/or **in that** the shielding gas flowing in the shielding gas channel (41) has no contact with the component assembly (1), and/or **in that** the process arrangement has a burner and **in that** in the welding or soldering process the burner (21) protrudes into the burner passage (33) from the auxiliary tool side facing away from the component assembly (1), specifically forming an annular gap between the burner (21) or the burner electrode (23) and the inner tool wall (47), and **in that**, in particular, the shielding gas in the burner passage flows out to the outside of the tool via the annular gap.

4. Process arrangement according to any one of the preceding claims, **characterized in that** the burner passage (33) is designed to be rotationally symmetrical about a tool central axis (W), and/or **in that** in particular the burner passage (33), in particular along the central axis (W), is divided into a central chamber (35) facing the component assembly (1), in which chamber the welding or soldering point (19) can be produced by forming an arc (25) between the electrode (23) and the component assembly (1), and into an inlet opening (37) facing away from the component assembly (1), in particular a funnel-shaped inlet opening, and/or **in that** the chamber cross-section of the central chamber (35) widens in the direction of the component assembly (1), and/or **in that** the central chamber (35) and the inlet opening (37) are connected to one another at a transition (39) with a reduced cross-section.

5. Process arrangement according to any one of the preceding claims, **characterized in that** the flow cross-section of the shielding gas channel (41) tapers in the direction of its mouth opening (45), and/or **in that** the shielding gas channel (41) extends rectilinearly in the auxiliary tool (27), so that the shielding gas flows linearly in the direction of the burner passage (33).

## Revendications

1. Agencement de processus pour un processus de soudage ou de brasage de métaux sous gaz de protection, processus au moyen duquel un point de soudage ou de brasage (19) peut être défini pour relier u n ensemble de composants (1), avec un outil auxiliaire (27) qui, lors du processus de soudage ou de brasage, protège la zone adjacente au point de soudage ou de brasage (19) contre les traces de soudage, dans lequel l'outil auxiliaire (27) présente un passage de brûleur (33) par l'intermédiaire duquel un brûleur (21) peut être amené avec son électrode (23) en connexion active avec l'ensemble de composants (1), à savoir en formant le point de soudage ou de brasage (19), et dans lequel l'outil auxiliaire (27) présente un raccord de gaz de protection (43) qui peut être relié à une source de gaz de protection et par l'intermédiaire duquel du gaz de protection peut être introduit dans le passage de brûleur (33) pour protéger le métal en fusion dans le point de soudage ou de brasage (19), dans lequel l'outil auxiliaire (27) est conçu avec au moins un canal de gaz de protection (41) qui relie le raccord de gaz de protection (43) directement, c'est-à-dire sans agencement intermédiaire de chambres d'écoulement, au passage de brûleur (33), en vue d'une réalisation à encombrement réduit, et
dans lequel l'ouverture d'embouchure (45) du canal de gaz de protection (41) est réalisée dans une paroi interne d'outil (47) délimitant le passage de brûleur (33),
**caractérisé en ce que**
l'ouverture d'embouchure (45) est positionnée dans la paroi interne d'outil auxiliaire (47) de sorte qu'un écoulement tourbillonnaire se forme dans le passage de brûleur (33) autour de l'axe central d'outil auxiliaire (W).

2. Agencement de processus selon la revendication 1, **caractérisé en ce que** l'agencement de processus présente un brûleur et **en ce que** le brûleur (21) est conçu sans buse de gaz de protection, de sorte que l'amenée de gaz de protection dans le passage de brûleur (33) s'effectue uniquement par l'intermédiaire d'un canal de gaz de protection (41) de l'outil auxiliaire (27).

3. Agencement de processus selon la revendication 1 ou 2, **caractérisé en ce que** le canal de gaz de protection (41) s'étend au moins partiellement à l'intérieur de l'outil auxiliaire (27), de sorte en particulier que la section transversale d'écoulement du canal de gaz de protection (41) est complètement limitée par le matériau d'outil auxiliaire et/ou le canal de gaz de protection (41) ne présente aucune liaison d'écoulement directe avec l'ensemble de composants (1) ou est fermé par rapport à l'ensemble de composants (1) et/ou **en ce que** le gaz de protection s'écoulant dans le canal de gaz de protection (41) est sans contact avec l'ensemble de composants (1) et/ou **en ce que** l'agencement de processus présente un brûleur et **en ce que**, lors du processus de soudage ou de brasage, le brûleur (21) pénètre dans le passage de brûleur (33) depuis le côté de l'outil auxiliaire opposé à l'ensemble de composants (1), à savoir en formant un espace annulaire entre le brûleur (21) ou l'électrode de brûleur (23) et la paroi interne d'outil (47), et **en ce que** en particulier le gaz de protection se trouvant dans le passage de brûleur peut s'écouler vers l'extérieur de l'outil par l'intermédiaire de l'espace annulaire.

4. Agencement de processus selon l'une quelconque des revendications précédentes, **caractérisé en ce que** le passage de brûleur(33) est conçu de manière symétrique en rotation autour d'un axe central d'outil (W) et/ou **en ce que** en particulier le passage de brûleur (33) est divisé, en particulier le long de l'axe central (W), en une chambre centrale (35) tournée vers l'ensemble de composants (1), dans lequel le point de soudage ou de brasage (19) peut être généré en formant un arc électrique (25) entre l'électrode (23) et l'ensemble de composants (1) et en une ouverture d'introduction (37), en particulier en forme d'entonnoir, opposée à l'ensemble de composants (1) et/ou **en ce que** la section transversale de chambre de la chambre centrale (35) s'élargit en direction de l'ensemble de composants (1) et/ou **en ce que** la chambre centrale (35) et l'ouverture d'introduction (37) sont reliées entre elles au niveau d'une transition (39) à section transversale réduite.

5. Agencement de processus selon l'une quelconque des revendications précédentes, **caractérisé en ce que** la section transversale d'écoulement du canal de gaz de protection (41) se rétrécit en direction de son ouverture d'embouchure (45) et/ou **en ce que** le canal de gaz de protection (41) s'étend en ligne droite dans l'outil auxiliaire (27), de sorte que le gaz de protection s'écoule linéairement en direction du passage de brûleur(33).
